(19) Europäisches Patentamt / European Patent Office / Office européen des brevets

(11) **EP 2 035 790 B1**

(12) **EUROPÄISCHE PATENTSCHRIFT**

(45) Veröffentlichungstag und Bekanntmachung des Hinweises auf die Patenterteilung:
**20.04.2016   Patentblatt 2016/16**

(51) Int Cl.:
***G01F 23/284*** *(2006.01)*

(21) Anmeldenummer: **07730166.1**

(86) Internationale Anmeldenummer:
**PCT/EP2007/055905**

(22) Anmeldetag: **14.06.2007**

(87) Internationale Veröffentlichungsnummer:
**WO 2008/003573 (10.01.2008 Gazette 2008/02)**

(54) **VORRICHTUNG ZUR ERMITTLUNG UND/ODER ÜBERWACHUNG DES FÜLLSTANDES EINES MEDIUMS**

APPARATUS FOR DETERMINING AND/OR MONITORING THE LEVEL OF A MEDIUM

DISPOSITIF DE DÉTERMINATION ET/OU DE SURVEILLANCE DU NIVEAU DE REMPLISSAGE D'UNE SUBSTANCE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **03.07.2006   DE 102006030965**

(43) Veröffentlichungstag der Anmeldung:
**18.03.2009   Patentblatt 2009/12**

(73) Patentinhaber: **Endress+Hauser GmbH+Co. KG
79689 Maulburg (DE)**

(72) Erfinder:
  • **CHEN, Qi
    79689 Maulburg (DE)**
  • **BARTFAI, Tamas
    H-1143 Budapest (HU)**
  • **WENDLER, Armin
    79111 Freiburg (DE)**

(74) Vertreter: **Andres, Angelika Maria
    Endress+Hauser (Deutschland) AG+Co. KG
    PatServe
    Colmarer Strasse 6
    79576 Weil am Rhein (DE)**

(56) Entgegenhaltungen:
**EP-A- 1 055 924          DE-U1- 20 023 063
US-A1- 2006 109 010**

• **JAMES C. WILTSE: "Recent developments in Fresnel zone plate antennas at microwave/millimeter wave" PROCEEDINGS OF SPIE - CONFERENCE ON OPTICAL ANALOGIES IN MICROWAVE/MILLIMETER-WAVE DESIGN, Bd. 3464, 1. Oktober 1998 (1998-10-01), Seiten 146-154, XP002449132 San Diego, California**

**Beschreibung**

Die vorliegende Erfindung betrifft eine Vorrichtung zur Ermittlung und/oder Überwachung des Füllstandes eines Mediums in einem Behälter mit einer Antenne, die die Hochfrequenzsignale in einer vorgegebenen Schwingungsmode in einem begrenzten Raum in einer vorgegebenen Abstrahlrichtung aussendet und empfängt, wobei vor der Antenne in Abstrahlrichtung ein Antennenschutzelement aus einem die Hochfrequenzsignale durchlässigem Material ausgestaltet ist, von dessen Oberfläche ein entstehendes Kondensat des Mediums abläuft und/oder abtropft, und wobei eine Regel-/Auswerteeinheit vorgesehen ist, der die empfangen Hochfrequenzsignate signaltechnisch auswertet und den Füllstands bestimmt.

Ein Messprinzip, aus einer Vielzahl von Messmethoden den Füllstand in einem Behälter zu ermitteln, ist die Laufzeit-Messmethotte: Bei der Laufzeit-Messmethode werden beispielsweise Mikrowellen bzw. Radarwellen über eine Antennenvorrichtung ausgesendet und die an der Mediumsoberfläche reflektierten Echowellen werden nach der abstandsabhängigen Laufzeit des Messsignals wieder empfangen. Aus der halben Laufzeit lässt sich demgemäß der Füllstand des Mediums In einem Behälter berechnen. Die Echokurve stellt hierbei die empfangene Signalamplitude als Funktion der Zeit dar, wobei jeder Messwert der Echokurve der Amplitude eines in einem bestimmten Abstand an einer Oberfläche reflektierten Echosignals entspricht. Die Laufzelt-Messmethode wird im wesentlichen in zwei Ermittlungsverfahren eingeteilt. Die Zeüdifferenzmessung ist eine erstes Ermittlungsverfahren, die die Zeit, die ein breitbandiger Wellensignalimpuls für eine zurückgelegte, Wegstrecke benötigt, ermittelt, und ein weiteres weit verbreitetes Ermittlungsverfahren Ist die Bestimmung der Kippfrequenzdifferenz des ausgesendeten, frequenzmodulierten Hochfrequenzsignals zum reflektierten, empfangenen, frequenzmodulierten Hochfrequenzsignal (FMCW - Frequency-Modulated Continuous Wave). Im Weiteren wird keine Beschränkung auf ein spezielles Ermittlungsverfahren gemacht.

In der Prozessmesstechnik werden Gruppenstrahlerantennen bzw. Planarantennen oder Antennenarrays, Hornantennen oder Parabolantennen schon seit längerer Zeit eingesetzt. Planarantennen zeichnen sich durch ihre kompakte Bauweise und preiswerte Herstellung gegenüber anderen Antennen aus. Konventionell werden Planarantennen konzipiert, die üblicherweise linear- oder auch zirkular-polarisierte Wellen abstrahlen und empfangen. Einige Ausgestaltungen solcher Planarantennen sind beispielsweise in DE 101 18 008 A1 beschrieben. Als gedruckte Antennenstruktur unterscheiden sie sich wiederum von ihrem primären HF-Strahlungselement wie resonante Strukturen, wie z. B. Patch-, Schlitz-, Monopol- und Dipol-Antennen, und nicht resonante Schlitzantenne, wie z.B. getaperte Schlitz-Antennen und Vivaldi-Antennen, sowie, Kombination aus diesen resonanten und nicht resonanten Strukturen Die Einspeisung bzw. Anregung der Strahrungselemente erfolgt normalerweise über Streifenleitung (Microstrip line). Andere Leitungsstrukturen für die Einspeisung der Elemente wie Koplanar- und Schlitz-Leitung sind ebenfalls möglich. Durch die einfache foto-lithografische Fertigung als gedruckte Schaltung sind solche Planarantennen als Massenware sehr geeignet.

Eine weitere Gruppe von gedruckte Antennen bzw. Anregungsstrukturen sind solche, die eine bestimmte EM-Feldverteilung erzeugt. Wie aus EP 1083413 B1 bekannt ist, wird TE01 Mode mit Planar-Schlitzstrahlem erzeugt. Dieser Mode hat für die Füllstandsmessungen in Bypässen und Schwallrohren als Hohlleiter den Vorteil, dass die TE 01 Mode des hochfrequenten Messsignals aufgrund dessen Feldverteilung sehr dämpfungsarm ist und sich nahezu unbeeinflusst von Störungen an den Behälterwänden wie Schweißnähte, Löcher, ausbreitet Möglich ist auch, mit der Grund-Mode TE11 in einem runden Hohlleiter zu arbeiten. Eine besondere Eigenschaft der TE11 Mode ist, dass deren Laufgeschwindigkeit, sich Im Vergleich zu den anderen höheren Moden im Hohlleiter am besten ausbreitet.

Besonders problematisch in der Prozessmesstechnik ist die Kondensation und Ablagerung der Prozessmedien an der Antenne durch den Temperaturgradient im Prozesstank, weil durch das Kondensat eine massive Dämpfung des hochfrequenten Messsignals verursacht wird und außerdem die Abstrahlcharakteristik bzw. die Messeigenschaften der Antenne verändert wird. Bei Füllstandsmessungen im Schwallrohr bzw. Hohlleiter werden höhere Moden des hochfrequenten Messsignals angeregt, die sich mit unterschiedlicher Gruppenlaufgeschwindigkeit im Hohlleiter ausbreiten. Auf Grund der Interferenz der höheren Moden des hochfrequenten Messsignals mit dem Nutzsignal verschlechtert sich die Messgenauigkeit des Systems.

Grundlegend sind Planarantennen von der Störempfindlichkeit der Messung aufgrund des Kondensats im Vergleich zu den Horn-, den Parabolantennen benachteiligt, da die Abstrahlrichtung der Welle üblicherweise senkrecht zur Strukturebene der Antenne ausgerichtet ist. Weswegen die Oberfläche der Planarantenne orthogonal zum Gravitationsfeld der Erde bzw. parallel zur Füllgutoberfläche des Mediums angeordnet ist. Die flüchtigen Bestandteile des zu messenden Füllgutes kondensieren an der kalten Oberfläche der Planarantenne, wodurch sich Tropfen bilden, die erst ab einer bestimmten Größe abtropfen, wenn die Oberflächenspannung nicht mehr ausreicht den Tropfen zu haften. Da sich die Kondensation des verdampfenden Füllguts bzw. Mediums an der planen Abstrahloberfläche der Planarantenne nicht vermeiden lässt, wird versucht, über eine strukturelle Maßnahme das Abtropfen- und Abfließverhalten des Kondensats an der Planarantenne zu verbessern. Eine solche Ausgestaltung einer angepassten Planarantenne ist in der Patentschrift US 6,684,697 B1 beschrieben, wobei die Planarantenne um einen Winkel α schräg zu einer Horizontalen H angeordnet ist. Durch die Schrägstellung hat die Gravitationskraft auch eine Kraftkomponente parallel zur Oberfläche der Planarantenne, wodurch das Kondensat, angetrieben durch diese zusätzliche Kraftkomponente (Normalkraft), zu größeren Tropfen zusammen läuft und an gegebener Stelle abtropft. Die Änderung der Wellenfront bzw- der Abstrahlrichtung der Strahlungskeule durch die Schrägstellung der Planarantenne wird über eine unterschiedliche Phasenansteuerung der Antennenelementreihen kompensiert. Des Weitere ist in der Patentschrift US 6,629,458 B1 eine Ausgestaltung einer Planarantenne aufgezeigt, in der vor der Planarantenne ein gefüllter Hohlkegel als Antennenschutzelement bzw. Radome mit einem Füllmaterial aus einem dielektrischen, thermisch isolierenden Material gesetzt wird, das den gleichen Effekt wie zuvor beschrieben hat, dass das Kondensat von der Oberfläche der Antenne abtropfen kann. Solche Antennenschutzelemente in Form von Membranen, Linsen oder Kegeln werden auch bel Homantennen und Parabolantennen zum Schutz der Reflektionsflächen der Antennen vor Kondensatbildung oder Ablagerungen des Mediums eingesetzt.

Nachteilig an solchen Antennenschutzelementen nach dem Stand der Technik ist, dass das Antennenschutzelement zur Vermeidung der Dämpfung des hochfrequenten Messsignals nur mit einer möglichst geringen Höhe und Steigung ausgeführt werden kann. Auf Grund der geringen Steigungen der Strukturen des Antennenschutzelements tropft das Kondensat schlecht ab. Des Weiteren werden durch die Antennenschutzefernenten nach dem Stand der Technik höhere Störmoden angeregt, wodurch die Messperformance des Messgeräts verringert wird.

US 2006/109010 A1 beschreibt eine Antennenvorrichtung zum Bestimmen des Füllstandes eines Füllmaterials in einem Behälter. Die Antennenvorrichtung umfasst eine flache Array-Antenne mit einem Emissionsbereich zum Emittieren von Messsignalen in Richtung der Oberfläche des Füllmaterials und Mittel zum Halten der Array-Antenne über einer Öffnung des Behälters. Ferner umfasst die Antenne eine schützende dielektrische Abdeckung, die eine Emissionsfläche bildet, wobei die dielektrische Abdeckung eine Ausdehnung aufweist, die größer ist als die Öffnung.

Der Erfindung liegt daher die Aufgabe zugrunde, ein Antennenschutzelement vorzuschlagen, das minimale Dämpfungsverluste der hochfrequenten Messsignale in Verbindung mit einer hohen Störmadenunterdrückung aufweist und das einfach, kostengünstig herzustellen ist.

Diese Aufgabe wird nach einer Ausgestaltung der Erfindung dadurch gelöst, dass In Abstrahlrichtung die Oberfläche des Antennenschutzelements entsprechend zumindest einer periodischen, symmetrischen Funktion, die auf die SymmetrieEigenschaften der vorgegebenen Schwingungsmode der Hochfrequenzsignale angepasst ist, geformt ist.

Dabei ist der begrenzte Raum als ein Wellenleiter ausgestaltet, in dem die Antenne die Hochfrequenzsignale aussendet und empfängt. Eine rotations-symmetrische, periodische Funktion der Oberfläche des Antennenschutzelements ist vorgesehen, falls die Aussendung und der Empfang der Hochfrequenzsignale der Antenne in einen Rund-Hohlleiter als Wellenleiter erfolgt. Attemativ ist eine translationssymmetrische, periodische Funktion der Oberfläche des Antennenschutzelements vorgesehen, falls die Aussendung und der Empfang der Hochfrequenzsignale der Antenne in einen Rechteck-Hohlleiter als Wellenleiter erfolgt.

Durch die Anpassung der periodischen Funktion der Oberflächenstruktur des Antennenschutzelements auf die Symmetrieeigenschaften des Sollmodes des hochfrequenten Messsignals wird erreicht, dass die Störmoden unterdrückt werden und gleichzeitig das Abtropfverhalten des Kondensats von der Oberfläche des Antennenschutzelements verbessert wird.

In einer besonders bevorzugten Ausführungsform der Erfindung ist vorgesehen, dass die Antenne als eine Planarantenne, wie beispielsweise eine gedruckte Patch- und/oder Schlitz Antenne ausgestaltet ist.

In einer besonders bevorzugten Ausführungsform der Erfindung ist vorgesehen, dass die periodische, symmetrische Funktion der Oberfläche des Antennenschutzelements Maxima und/oder Minima aufweist, die in einer zur Abstrahlrichtung orthogonal ausgerichteten Maximal-Ebene und/oder die in einer zur Abstrahlrichtung orthogonal ausgerichteten Minimal -Ebene liegen.

Eine vorteilhafte Ausgestaltung der erfindungsgemäßen Lösung ist es, dass die periodische, symmetrische Funktion der Oberfläche des Antennenschutzelements Maxima und/oder Minima aufweist, die in einer zu zumindest einem Symmetriepunkt ansteigende oder abfallende Maximal-Ebene und/oder die in einer zu zumindest einem Symmetriepunkt ansteigende oder abfallende Minimal-Ebene liegen.

Eine bevorzugte Variante der erfindungsgemäßen Lösung ist darin zu sehen, dass als symmetrische, periodische Funktion der Oberfläche des Antennenschutzelements zumindest eine Dreiecksfunktion, zumindest eine Sägezahnfunktion und/oder zumindest eine Rechteckfunktion vorgesehen ist.

Eine besonders vorteilhafte Weiterbildung der erfindungsgemäßen Lösung schlägt vor, dass als symmetrische, periodische Funktion der Oberfläche des Antennenschutzelements zumindest eine trigonometrische, zumindest eine parabolische und/oder zumindest eine hyperbolische Funktion vorgesehen ist.

Gemäß einer dienlichen Ausgestaltung der erfindungsgemäßen Vorrichtung wird vorgeschlagen, dass das Antennenschutzelement einteilig aus einem dielektrischen Material, insbesondere Polytetrafluorethylen (PTFE), ausgestaltet ist.

Eine geeignete Ausgestaltung der erfindungsgemäßen Vorrichtung besteht darin, dass das Antennenschutzelement mehrteilig aus dielektrischen Materialien ausgestaltet ist, wie z.B. ein Grundkörper mit einer speziellen chemisch resistenten und/oder antistatischen Beschichtung. Ein mehrteiliger, schichtweiser Aufbau des Antennenschutzelements vereinfacht beispielsweise die Herstellung von komplexeren periodisch, symmetrischen Funktionen der Oberflächenstruktur des Antennenschutzelements. Außerdem können zusätzliche Schichten zur Herabsetzung der Adhäsionskräfte oder zur Verbesserung der chemischen Resistenz auf das Antennenschutzelement aufgebracht werden.

In einer vorteilhaften Ausführungsform der Erfindung ist vorgesehen, dass das Antennenschutzelement aus einem druckstabile, thermisch isolierenden Material ausgestaltet ist. Aufgrund der thermisch isolierenden Wirkung des Antennenschutzelements wird verhindert, dass sich Kondensat an der Oberfläche bilden kann, da in diesem Fall die Prozesstemperatur und die Oberflächentemperatur gleich sind. Durch die Druckstabilität des dielektrischen Materials des Antennenschutzelements wird gewährleistet, dass bei hohem Druck von einigen zehn bis hundert Bar das Antenneschutzelement nicht eingedrückt wird und/oder sich verformt. Dies ist besonders zu beachten, falls das Antennenschutzelement nicht plan an der Antennestruktur anliegt, sondern dieses wie beispielsweise bei einer Homantenne oder Parabolantenne so zusagen als Deckel abschließt und somit sich ein hermetisch geschlossener Hohlraum zwischen dem Antennestruktur und dem Antennenschutzelement ausbildet.

Angesichts der zuvor aufgeführten Merkmale verfüllt diese Erfindung die folgenden Vorteile und Eigenschaften, dass durch diese Ausgestaltung der Antennenstruktur die auftretenden höheren Störmoden unterdrückt werden, dass der Weilenwiderstandsübergang von der Antenne zum Antennenschutzelement und weiter in den Prozessraum angepasst ist und dass die Antenne ein gutes Abtropfverhalten von Kondensat aufweist, wodurch nur eine geringe Signaldämpfung feststellbar ist.

Die Erfindung wird anhand der nachfolgenden Zeichnungen näher erläutert. Es zeigt

Fig. 1 : eine schematische Gesamtdarstellung auf einen Behälter montierte Vorrichtungen zur Ermittlung und Überwachung des Füllstandes eines Mediums in einem Behälter,

Flg. 2 : eine schematische Darstellung der Draufsicht eines ersten Ausführungsbeispiels eines rotationssymmetrischen Antennenschutzelements,

Fig. 3 : eine perspektivische Darstellung des ersten Ausführungsbeispiels des rotationssymmetrischen Antennenschutzelements aus Fig. 2,

Fig, 4 : eine perspektivische Darstellung eines zweiten Ausführungsbeispiels eines translationssymmetrischen Antennenschutzelements,

Fig. 5 : eine schematische Darstellung eines ersten Querschnitts des ersten oder zweiten Ausführungsbeispiels des Antennenschutzelements mit einer Dreiecksfunktion.

Fig. 6 : eine schematische Darstellung eines zweiten Querschnitts des ersten oder zweiten Ausführungsbeispiels des Antennenschutzelements mit einer trigonometrischen Funktion,

Fig. 7 : einen Dämpfungsdiagramm des ersten Ausführungsbeispiels eines kegelförmigen Antennenschutzelements nach dem Stand der Technik, und

Fig. 8 : einen Dämpfungsdiagramm des ersten Ausführungsbeispiels des erfindungsgemäßen, rotationssymmetrischen Antennenschutzelements.

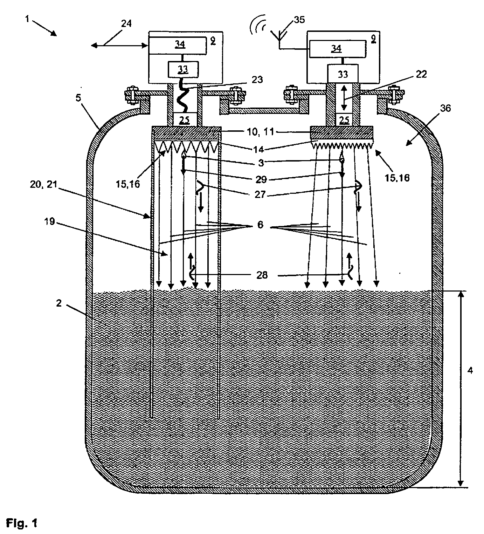

Fig. 1 zeigt zwei Vorrichtungen 1, die den Füllstand 4 eines Mediums 2 in einem Behälter 5 ermittelt. Die rechte Ausführungsform der Vorrichtung 1 zeigt eine Ausgestaltung aus dem Stand der Technik und ist über einen Stutzen direkt an dem Behälter 5 angebracht, so dass dessen Antenne 10 die Hochfrequenzsignale 6 als linear-polarisierte Welle mit einer keulenförmigen Abstrahlcharakteristik in orthogonaler Abstrahlrichtung 26 zur Grenzfläche des Mediums 3 in den Prozessraum 36 frei abstrahlt. Dem hingegen ist, die linke erfindungsgemäße Ausführungsform der Vorrichtung 1 über einen Stutzen am Behälter 5 angebracht, so dass dessen Antenne 10 bzw. Anregungsstruktur mit dem daran befestigten Wellenleiter 20 die Hochfrequenzsignale 6 als Wellenleiter-Mode, z.B. als rotationssymmetrischen Mode TE01 in einem Rund-Hohlleiter 21, in den begrenzten, Raum 19 anregt.

Die Hochfrequenzsignale 6 werden in der Sende-/Empfangseinheit 33 des Messumformers 9 erzeugt und über die Koaxialleitung 23 oder über einen Signalhohlleiter 22 mittels des Speisenetzwerks 25 an die aussendenden Antennenelemente der Planarantenne 10, 11 weitergeleitet. Die Hochfrequenzsignale 6 werden von der Planarantenne 10,11 als Sendesignal 27 im Prozessraum 36 oder in einem begrenzten Raum 19, der beispielsweise als Wellenleiter 20 ausgestaltet ist, ausgesendet. Eine Ausführungsform eines Wellenleiters 20 stellt beispielsweise ein ungefüllter oder zumindest teilweise mit einem dielektrischen, mikrowellendurchlässigen Material gefüllter Rund-Hohlleiter 21 dar. Die Planarantenne 11 und das Antennenschutzelement 14 bzw. das Radome sind erfindungsgemäß so aufeinander abgestimmt, dass beim Übergang des Hochfrequenzsignals 6 von der Planarantenne 11 in den Rund-Hohlleiter 21, nur die darin gewünschte Mode, z.B. TE01, des hochfrequenten Messsignals 6 erzeugt wird-Die Anregung höherer Störmoden 8, die auch im Rund-Hohlleiter 21 ausbreitungsfähig sind, wird durch diese Ausgestaltungsart des Antennenschutzelements 14 vermieden bzw. unterdrücke.

Für den Fall der freien Abstrahlung (Stand der Technik) der Hochfrequenzsignale 6 in den Prozessraum 36 sind die Planarantenne 11 und das Antenrtenschutzelement 14 so aufeinander abgestimmt, dass die Abstrahlcharakteristik der Antenne dadurch nicht wesentlich beeinflusst wird. Das gesendete Hochfrequenzsignal 27 wird von der Grenzfläche des Mediums 2 reflektiert, wird von der Planarantenne 11 wieder empfangen und zurück zur Sende-/Empfangseinheit 33 geleitet, in der die empfangenen Hochfrequenzsignale 6 elektronisch vorverarbeitet werden. Die empfangenen Hochfrequenzsignale 6 werden beispielsweise in der Sende-/Empfangseinheit 33 über eine sequentiellen Abtastung mit zwei leicht phasenversetzten Hochfrequenzimpulsfolgen in ein zeitgedehntes niederfrequenteres Zwischenfrequenzsignal umgewandelt. Das auf diese Weise herunter gemischte Reflexionssignal 28 kann anschließend im niederfrequenten Bereich von der Regel-/Auswerteeinheit 34 ausgewertet werden und die Laufzeit bzw. Laufweg des ausgesandten Hochfrequenzsignals 6 ermittelt werden. Des Weiteren übernimmt die Regel-/Auswerteeinheit 34 noch Kommunikationsaufgaben über einen Feldbus oder eine Zweidrahtleitung 24 mit einer beispielsweise entfernten Leitstelle oder einem anderen Feldgerät. Die Datenübertragung bzw. Kommunikation über den Feldbus 24 erfolgt beispielsweise nach dem CAN-, HART-, PROFIBUS DP-, PROFIBUS FMS-, PROFIBUS PA-, oder FOUNDATION FIELDBUS- Standard. Des Weiteren ist es möglich, wie im linken Ausführungsbeispiel der Vorrichtung 1 gezeigt, die Kommunikation über eine drahtlose Schnittstelle 35 nach einem der bekannten Kommunikations-Standard, wie z.B. ZigBee, Bluetooth, WLAN, durchzuführen.

Durch die spezielle Formgebung des Antennenschutzelements 14 der Planarantenne 11 entstehen Minima 18 und/oder Maxima 17 in der periodisch, symmetrischen Funktion 16 der Oberfläche 15. Durch die der Adhäsionskraft entgegenwirkende Gravitationskraft 29 läuft das sich bildende Kondensat 3 als Tropfen zusammen und tropft an einer Abrisskante oder einem Abrisspunkt, wie beispielsweise einem Maxima 17 des periodischen Funktion 16 der Oberfläche 15, wieder von der Oberfläche 15 des Antennenschutzelements 14 ab.

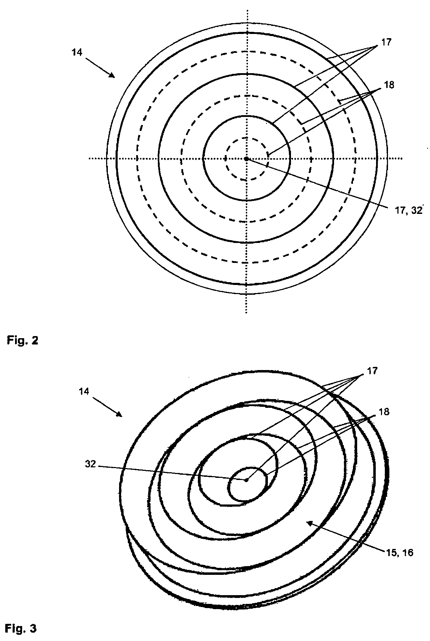

In Fig. 2 ist eine Draufsicht und Fig. 3 ist eine perspektivische Ansicht eines rotationssymmetrischen Antennenschutzelements 14 nach einem ersten Ausführungsbeispiel dargestellt. Das Antennenschutzelement 14 zeigt eine periodische Funktion 16 der Oberflächen 15 auf, deren Maxima 17 und Minima 18 auf konzentrischen Kreisen um einen Symmetriepunkt bzw. eine Symmetrieachse 32 angeordnet sind.

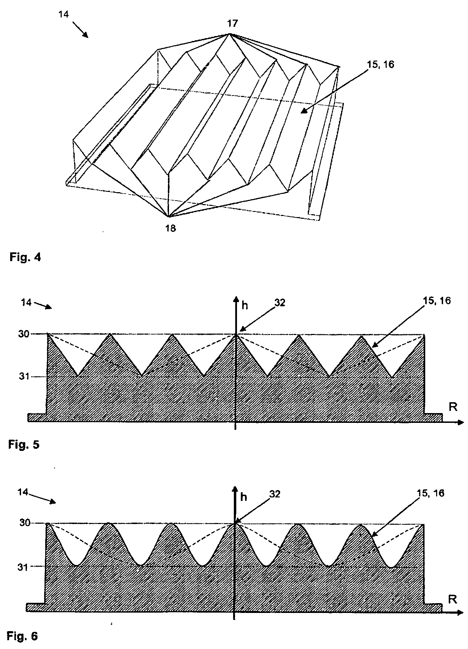

Entsprechende ausführbare Querschnitte des ersten Ausführungsbeispiels sind in Fig. 5 und Fig. 6 zu sehen. Auf der Abszissenachse des eingezeichneten Koordinatensystems ist ausgehend von der Symmetrieachse 32 der Radius R und auf der Ordinatenachse die Höhe h des Antennenschutzelements 14 aufgetragen. In Fig. 5 ist eine periodische Dreieck-Funktion 16 der Oberfläche 15 des Antennenschutzelements 14 mit einer Periode N=3 abgebildet. In Fig. 6 ist eine periodische Sinus-Funktion 16 der Oberfläche 15 des Antennenschutzelements 14 mit einer Periode N=3 abgebildet. Weitere Funktionen 16 der Oberflächenstruktur 15 des Antennenschutzelements 14 mit einer Periode von N=9 ist als Strich-Linie in der Fig. 5 und in der Fig. 6 andeutungsweise dargestellt. Es sind jedoch auch alle anderen, trigonometrischen, hyperbolischen Funktionen 16 als Struktur der Oberfläche 15 denkbar. Die Maxima 17 der periodischen Funktion 16 liegen alle auf einer Maximal-Ebene 30 und die Minima 18 liegen alle auf einer Minimal-Ebene 31. Diese Ebenen 30, 31 sind in den Figuren 5, 6 und 8 parallel zueinander angeordnet, jedoch ist es auch möglich, dass die Maximal-Ebene 30 und/oder Minimal-Ebene 31 in Richtung Symmetrieachse 32 ansteigt oder abfällt, so dass die Maxima 17 und Minima 18 der periodischen Funktion 16 auch auf unterschiedlichen Höhen h liegen können. In den Figuren ist dies nicht explizit ausgeführt, dass die Maxima 17 der periodischen Funktion 16 auf unterschiedlichen Höhen h liegen können und somit die Funktion 16 verschieden Amplitudenhöhen aufweisen können.

Das erfindungsgemäße Antennenschutzelements 14 mit der periodischen, symmetrischen Funktion 16 der Oberfläche 15 beruht auf der Überlegung, dass das Kondensat 3 von einer mehrfachen, kleinflächig unterteilten Oberfläche 15 mit größeren Steigungswinkeln besser als von einer einfachen durchgängigen Kegeloberfläche mittels der Gravitation 29 abtropfen kann und damit die Antenne 10 unempfindlicher gegen die Bildung von Kondensat 3 wird. Eine Randbedingung, die bei diesen Überlegungen eingehalten werden muss, ist natürlich, dass die HF-Eigenschaft der Antenne 10, wie z.B. Abstrahlcharakteristik, Echoveriuste und Dämpfungsverhalten, nicht verschlechtert, sondern, wenn möglich, sogar verbessert werden.

Geht man vor der Annahme aus, dass die Planarantennen 11 im idealen Fall den Sollmode 7 den TE01-Mode des Hochfrequenzsignals 6 anregt, dann ist hier ein Übergang vom Antennenschutzelement 14 auf den Rund-Hohlleiter 21 zu entwerfen, der sich sowohl für die Anpassung als auch für die Unterdrückung von Störmoden 8 eignet. Eine rotationssymmetrische Funktion 16 der Oberfläche 15 des Antennenschutzelements 14 ist aufgrund der rotationssymmetrischen Eigenschaften der TE01-Mode des Hochfrequenzsignals 6 in einem Rund-Hohlleiter 21 liefert hierbei sehr gute Ergebnisse. Die Minimierung der Reflexion, die Unterdrückung von Störmoden 8 und das Abtropfverhalten des Kondensats 3 werden durch die rotationssymmetrische, periodische Funktion 16 der Oberfläche 15 des Antennenschutzelements 14 erreicht. Um die reflektierten und transmittierten Störmoden 8 (TE0n für n>1) in einem Multimoden-Rund-Hohlleiter 21 nicht nennenswert anzuregen, muss die Anzahl der Periode N bis zum Hohlleiter-Radius R so gewählt werden:

$$2N - 1 > n \qquad\qquad\qquad (Gl.1)$$

Hierbei ist n der Index der höchsten TE0n-Mode, die in diesem Fall im Rund-Hohlleiter 21 noch ausbreitungsfähig sind. Nachdem die Anzahl der Periode des Schutzelementes gewählt ist, kann eine beliebige periodische Funktion 16 eingesetzt werden. Jedoch ist die Dreiecksfunktion 16 der Oberfläche 15 des Antennenschutzelements 14 aus fertigungstechnischer Sicht am einfachsten zu realisieren und außerdem sind die weiteren Anforderungen, wie die Minimierung der Reflexion der Mode am Dielektrika -Übergang und die Optimierung des Abtropfverhaltens von Kondensat 3, durch Änderung der Höhe h der periodischen Funktion 16 erlangbar.

In Fig. 4 ist eine perspektivische Ansicht eines zweiten Ausführungsbeispiels eines Antennenschutzelementes 14 mit einer translationssymmetrischen Funktion 16 der Oberfläche 15 aufgezeigt Diese Art von translationssymmetrischen Antennenschutzelementen 14 ist auf die linear-polarisierte Welle der Freifeld-Antenne und auch Antenne 10 oder Anregungsstruktur, die mit linear oder quasllinear-polarisierter Mode In einem Wellenleiter 20, z. B. TE10 Mode in einem Rechteck-Hohlleiter, arbeitet, angepasst. Der Querschnitt der translationssymmetrischen Antennenschutzelemente 14 kann auch beispielsweise den Beispielen in Fig. 5 und in Fig. 6 entsprechen, der In die dritte Dimension linear weitergerührt wurde.

Da die erfindungsgemäßen Antennenschutzelemente14 die Abstrahlungselgenschaften der Planarantenne 11 kaum beeinflussen, können die auch direkt an vorhandene Planarantennen 11 adaptierbar werden.

Durch die Verwendung eines chemisch resistenten Fluorkunststoffes, wie z.B. Perfluoralkoxy-Copolymer (PFA), Polytetrafluorethylen (PTFE) und Polyvinylidenfluoride (PVDF) ist es möglich, die Planarantenne 11 mit dem Antennenschutzefement 14 in Prozessen mit aggressiven Medien 2 und bei gemäßigten hohen Temperaturen einzusetzen. Durch eine Plasmaoberflächenbehandlung der Oberfläche 15 des Antennenschulzelements 14 aus einem chemisch resistenten Fluorkunststoff kann das Abtropfverhalten des Kondensats 3 von der Oberfläche 15 abermals verbessert werden, da die Adhäsionskräfte aufgrund der durch das Plasma veränderten Oberflächenstruktur im Mikrometerbereich verringert werden. Außerdem sind Beschichtung aus einem für das hochfrequente Messsignal 6 durchlässigen Material zur Verbesserung der Antistatik, Verbesserung der chemischen und/oder mechanischen Resistenz und Herabsetzung der Adhäsionkräfte der Oberfläche 15 des Antennenschutzelements 14 vorgesehen. Desweitem ist es möglich durch eine beispielsweise mehrschichtige Beschichtung oder einen mehrschichtigen Aufbau des Antennenschutzelements 14 die Reflexion des Signals am Übergang weiter zu optimieren.

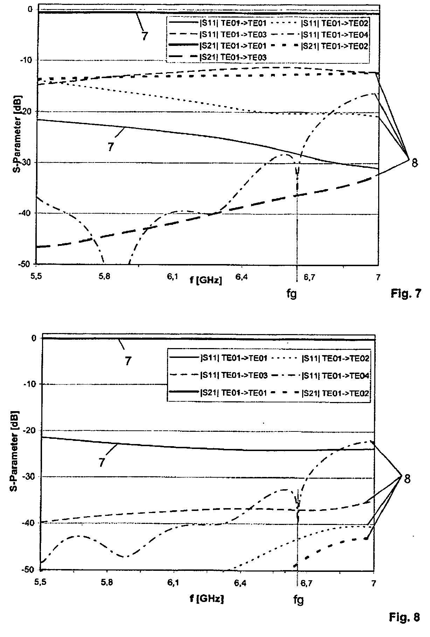

In Fig. 7 und Fig. 8 sind Diagramme der relevanten S-Parameter in verschiedenen Moden des hochfrequenten Messsignals 6 beim Übergang vom Antennenschutzelement 14 auf einen Rundhohllieter 21 aufgezeigt. Auf der Abszissenachse ist die Frequenz f in $1*10^9$ Hertz und auf Ordinatenachse ist der S-Parameter als Dämpfung in Dezibel aufgetragen.

Im Hochfrequenzbereich ist es nicht mehr möglich, die Impedanzen durch eine einfache Spannungs- und Strommessungen zu bestimmen. Aus diesem Grund bestimmt man an vorgegebenen Stellen der Impedanz die Reflexion, Transmission und Absorption des hochfrequenten Messsignals 6 in Amplitude und Phase. Hierzu werden die S-Parameter bzw. Streuparameter der Übertragungsstrecke ermittelt. Der Eingangsreflexionskoeffizient S11 als reflektierender Anteil des hochfrequenten Messsignals 6 und der Vorwärts-Übertragungsfaktor S21 als transmittierender Anteil des hochfrequenten Messsignals 6 liefern hierbei aussagekräftige Werte über den Übergang der Hochfrequenzsignale 6 von der Planarantenne 11 mit dem Antennenschutzelement 14 auf den Wellenleiter 20.

In Fig. 7 sind die S-Parameter des Übergangs von einem kegelförmige Antennenschutzelement 14 mit einer Dreiecksfunktion 16 der Oberfläche 15, die die Bedingung (Gl.1) nicht verfüllt, einer Höhe h von 24 Millimeter und einem Radius R von 66 Millimeter ausgebildet ist, auf einen Rund-Hohlleiter 21 dargestellt. Hier ist leicht zu sehen, dass die Störmoden 8 in dieser Ausgestaltungsform des kegelförmigen Antennenschutzelements 14, wie beispielsweise TE02- und TE03-Moden, im transmittierenden und reflektierende Anteil des hochfrequenten Messsignals 6 nur unwesentlich unterdrückt werden. Oberhalb einer Grenzfrequenz fg von $6,6 *10^9$ Hertz wird sogar im reflektierende Anteil des hochfrequenten Messsignals 6 der TE04-Mode nur noch geringfügig gedämpft.

In Fig. 8 sind die S-Parameter des Übergangs von dem erfindungsgemäßen Antennenschutzelement 14 mit einer Periode N=3 der Dreiecksfunktion 16 der Oberfläche 15, die die Bedingung (Gl.1) t erfüllt, einer Höhe h von 18 Millimeter und einem Radius R von 66 Millimeter ausgebildet ist, auf einen Rund-Hohlleiter 21 dargestellt. Aus diesem Diagramm ist ersichtlich, dass die

Übertragungseigenschaften am Übergang der hochfrequenten Messsignale 6 von der Planarantenne 11 auf den Rund-Hohlleiter 21 durch die Anpassung des Antennenschutzelements 14 mittels einer erfindungsgemäßen periodischen symmetrischen Funktion 16 der Oberflächenstruktur 15 verbessert werden. Die Störmoden 8 werden stärker unterdrückt, und gleichzeitig erhöht sich der Anteil der transmittierten Sollmode 7 - im Gegensatz zu den in Fig. 7 dargestellten Ergebnissen eines kegelförmigen Antennenschutzelements 14. Durch das erfindungsgemäße Antennenschutzelement 14 konnte im Gegensatz zum kegelförmigen Antennenschutzelement 14 somit die Dynamik der Messung erheblich verbessert werden.

Aufgrund der flachen Ausführungsform eines erfindungsgemäßen Antennenschutzelements 14 ist er aus der Sicht der Konstruktion für planare Antennen wie gedruckte Patch-, Schlitz-Antennenstruktur besonders geeignet.

Diese Ausgestaltungsart der Antennenschutzelemente 14 ist auch an die klassische Horn-, Parabolantennen usw. adaptierbar, was hier jedoch nicht explizit angezeigt wird. Weiterer Vorteil des erfindungsgemäßen Antennenschutzelements 14 ist die massive Bauweise, die im Vergleich zur konventionellen hohlen Antennenschutzkonstruktion deutlich höhere mechanische Druckbelastung bzw. Prozessdruck aushalten kann. Diese ist vor allem für die Druckstabilität bei Antennen 10 mit Antennenschutzelement 14 mit Hohlräumen, wie z.B. bei Horn- und Parabolantennen mit Antennenschutzelementen 14 üblich, notwendig, um ein Eindringen von Medium 2 in diesen Hohlraum und/oder eine Deformation des Antennenschutzelementes 14 zur verhindern.

## Patentansprüche

1.  Vorrichtung (1) zur Ermittlung und/oder Überwachung des Füllstandes (4) eines Mediums (2) in einem Behälter (5), mit einer Antenne (10), die Hochfrequenzsignale (6) in einer vorgegebenen Schwingungsmode (7) In einem begrenzten Raum (19) in einer vorgegebenen Abstrahlrichtung (26) aussendet und empfängt,
    wobei vor der Antenne (10) in Abstrahlrichtung (26) ein Antennenschutzelement (14) aus einem für die Hochfrequenzsignale (6) durchlässigen Material ausgestattet ist, von dessen Oberfläche (15) ein entstehendes Kondensat (3) des Mediums (2) abläuft und/oder abtropft,
    und wobei eine Regel-/Auswerteeinheit (34) vorgesehen ist, welche die empfangen Hochfrequenzsignale (6) signaltechnisch auswertet und den Füllstands (4) bestimmt, wobei in Abstrahlrichtung (26) die Oberfläche (15) des Antennenschutzelements (14) entsprechend zumindest einer periodischen, symmetrischen Funktion (16), die auf die Symmetrle-Elgenschaften der vorgegebenen Schwingungsmode (7) der Hochfrequenzsignale (6) angepasst ist, geformt Ist,
    wobei der begrenzte Raum (19) als ein Wellenleiter (20) ausgestaltet ist, in dem die Antenne (10) die Hochfrequenzsignale (6) aussendet und empfängt.
    **dadurch gekennzeichnet,**
    **dass** eine rotations-symmetrische, periodische Funktion (16) der Oberfläche (15) des Antennenschutzelements (14) vorgesehen ist, falls die Aussendung und der Empfang der Hochfrequenzsignale (6) der Antenne (10) in einen Rund-Hohlleiter (21) als Wellenleiter (20) erfolgt, oder
    **dass** eine translationssymmetrische, periodische Funktion (16) der Oberfläche (15) des Antennenschutzelements (14) vorgesehen ist, falls die Aussendung und der Empfang der Hochfrequenzsignale (6) der Antenne (10) in einen Rechteck-Hohlleiter (21) als Wellenleiter (20) erfolgt.

2.  Vorrichtung nach Anspruch 1,
    wobei die Antenne (10) als eine Planarantenne (11), wie beispielsweise eine gedruckte Patch-, Schlitz-Antenne ausgestaltet ist.

3.  Vorrichtung nach Anspruch 1,
    wobei die periodische, symmetrische Funktion (16) der Oberfläche (15) des Antennenschutzelements (14) Maxima (17) und/oder Minima (18) aufweist, die in einer zur Abstrahlrichtung (29) orthogonal ausgerichteten Maximal-Ebene (30) und/oder die in einer zur Abstrahlrichtung (29) orthogonal ausgerichteten Minimal Ebene (31) liegen.

4.  Vorrichtung nach Anspruch 1,
    wobei die periodische, symmetrische Funktion (16) der Oberfläche (15) des Antennenschutzelements (14) Maxima (17) und/oder Minima (18) aufweist, die in einer zu zumindest einem Symmetriepunkt (32) ansteigende oder abfallende Maximal-Ebene (30) und/oder die in einer zu zumindest einem Symmetriepunkt (32) ansteigende oder abfallende Minimal -Ebene (31) liegen.

5.  Vorrichtung nach Anspruch 1, 3 oder 7,
    wobei als symmetrische, periodische Funktion (16) der Oberfläche (15) des Antennenschutzelements (14) zumindest eine Dreiecksfunktion, zumindest eine Sägezahnfunktion und/oder zumindest eine Rechteckfunktion vorgesehen ist.

6.  Vorrichtung nach Anspruch 1, 3 oder 7,

wobei als symmetrische, periodische Funktion (16) der Oberfläche (15) des Antennenschutzelements (14) zumindest eine trigonometrische, zumindest eine parabolische und/oder zumindest eine hyperbolische Funktion vorgesehen ist.

**7.** Vorrichtung nach Anspruch, 1, 3 oder 7,
wobei das Antennenschutzelement (14) einteilig aus einem dielektrischen Material, insbesondere Polytetrafluorethylen (PTFE), ausgestaltet ist.

**8.** Vorrichtung nach Anspruch, 1, 3 oder 7,
wobei das Antennenschutzelement (14) mehrteilig aus dielektrischen Materialien ausgestaltet ist.

**9.** Vorrichtung nach Anspruch 7,
wobei das Antennenschutzelement (14) aus einem druckstabilen, thermisch isolierenden Material ausgestaltet ist.

**Claims**

**1.** Apparatus (1) for determining and/or monitoring the level (4) of a medium (2) in a vessel (5)
with an antenna (10) which emits and receives high-frequency signals (6) in a pre-defined oscillation mode (7) in a limited space (19) in a pre-defined beam direction (26),
wherein an antenna protection element (14), designed from a material through which the high-frequency signals (6) can pass, is in front of the antenna (10) in the beam direction (26), from the surface of said element any condensate (3) of the medium (2) which may form drains off and/or drips off,
and wherein a control/evaluation unit (34) is provided which evaluates the high-frequency signals (6) received and determines the level (4), wherein, in the beam direction (26), the surface (15) of the antenna protection element (14) is formed according to at least one periodic, symmetric function (16) which is adapted to the symmetry properties of the pre-defined oscillation mode (7) of the high-frequency signals (6),
wherein the limited space (19) is designed as a waveguide (20) in which the antenna (10) emits and receives the high-frequency signals (6),
**characterized in that**
a rotationally-symmetric, periodic function (16) of the surface (15) of the antenna protection element (14) is provided if the high-frequency signals (6) of the antenna (10) are emitted and received in a circular waveguide (21) as the waveguide (20), or
a translationally-symmetric, periodic function (16) of the surface (15) of the antenna protection element (14) is provided if the high-frequency signals (6) of the antenna (10) are emitted and received in a rectangular waveguide (21) as the waveguide (20).

**2.** Apparatus as claimed in Claim 1,
wherein the antenna (10) is designed as a planar antenna (11), such as a printed patch and slot antenna.

**3.** Apparatus as claimed in Claim 1,
wherein the periodic, symmetric function (16) of the surface (15) of the antenna protection element (14) has a maximum (17) and/or a minimum (18) which lie on a maximum plane (30) which is orthogonal to the beam direction (29) and/or which lie on a minimum plane (31) which is orthogonal to the beam direction (29).

**4.** Apparatus as claimed in Claim 1,
wherein the periodic, symmetric function (16) of the surface (15) of the antenna protection element (14) has a maximum (17) and/or a minimum (18) which lie on a maximum plane (30) which rises or falls in relation to at least one point of symmetry (32) and/or which lie on a minimum plane (31) which rises or falls in relation to at least one point of symmetry (32).

**5.** Apparatus as claimed in Claim 1, 3 or 7
wherein at least one triangular function, at least one saw tooth function and/or at least one rectangular function is provided as the symmetric, periodic function (16) of the surface (15) of the antenna protection element (14).

**6.** Apparatus as claimed in Claim 1, 3 or 7
wherein at least one trigonometric function, at least one parabolic function and/or at least one hyperbolic function is provided as the symmetric, periodic function (16) of the surface (15) of the antenna protection element (14).

**7.** Apparatus as claimed in Claim 1, 3 or 7,
wherein the antenna protection element (14) is designed as a one-piece construction out of a dielectric material, particularly polytetrafluoroethylene (PTFE).

**8.** Apparatus as claimed in Claim 1, 3 or 7,
wherein the antenna protection element (14) is designed as a multi-part construction out of dielectric materials.

**9.** Apparatus as claimed in Claim 7,
wherein the antenna protection element (14) is made from a pressure-resistant, thermally isolating material.

**Revendications**

**1.** Dispositif (1) destiné à la détermination et/ou à la surveillance du niveau (4) d'un produit (2) dans un réservoir (5), avec une antenne (10), qui émet et reçoit les signaux haute fréquence (6) selon un mode d'oscillations (7) prédéfini dans un espace (19) délimité, dans une direction de rayonnement (26) prédéfinie,
pour lequel est disposé devant l'antenne (10), dans la direction de rayonnement (26), un élément de protection d'antenne (14) constitué d'un matériau laissant passer les signaux haute fréquence (6), de la surface (15) duquel s'écoule ou s'égoutte un condensat (3) provenant du produit (2),
et pour lequel est prévue une unité de régulation / d'exploitation (34), laquelle exploite les signaux haute fréquence (6) et détermine le niveau (4),
pour lequel la surface (15) de l'élément de protection d'antenne (14) est adaptée, dans la direction de rayonnement (26), au moins selon une fonction (16) symétrique, périodique, laquelle est formée d'après les propriétés de symétrie du mode d'oscillations (7) prédéfini des signaux haute fréquence (6),
pour lequel l'espace (19) délimité est conçu en tant que guide d'ondes (20), dans lequel l'antenne (10) émet et reçoit les signaux haute fréquence (6),
**caractérisé**
**en ce qu'**est prévue une fonction (16) périodique, à symétrie de révolution, de la surface (15) de l'élément de protection d'antenne (14), pour le cas où l'émission et la réception des signaux haute fréquence (6) de l'antenne (10) interviennent en tant que guide d'ondes (20) dans un guide d'ondes circulaire, ou
**en ce qu'**est prévue une fonction (16) périodique, à symétrie de translation, de la surface (15) de l'élément de protection d'antenne (14), pour le cas où l'émission et la réception des signaux haute fréquence (6) de l'antenne (10) interviennent en tant que guide d'ondes (20) dans un guide d'ondes rectangulaire.

**2.** Dispositif selon la revendication 1,
pour lequel l'antenne (10) est conçue en tant qu'antenne planaire (11), comme par exemple une antenne imprimée du type "patch" ou à fente.

**3.** Dispositif selon la revendication 1,
pour lequel la fonction (16) symétrique, périodique, de la surface (15) de l'élément de protection d'antenne (14) présente des maxima (17) et/ou des minima (18), qui se situent dans un plan de maxima (30) orthogonal à la direction de rayonnement (29) et/ou dans un plan de minima (31) orthogonal à la direction de rayonnement (29).

**4.** Dispositif selon la revendication 1,
pour lequel la fonction (16) symétrique, périodique, de la surface (15) de l'élément de protection d'antenne (14) présente des maxima (17) et/ou des minima (18), qui se situent dans un plan de maxima (30) montant ou descendant par rapport à au moins un point de symétrie (32) et/ou dans un plan de minima (31) montant ou descendant par rapport à au moins un point de symétrie (32).

**5.** Dispositif selon la revendication 1, 3 ou 7,
pour lequel est prévue, en tant que fonction (16) périodique, symétrique, de la surface (15) de l'élément de protection d'antenne (14), au moins une fonction triangle, au moins une fonction dent de scie et/ou au moins une fonction rectangle.

**6.** Dispositif selon la revendication 1, 3 ou 7,
pour lequel est prévue, en tant que fonction (16) périodique, symétrique, de la surface (15) de l'élément de protection d'antenne (14), au moins une fonction trigonométrique, au moins une fonction parabolique et/ou au moins une fonction hyperbolique.

**7.** Dispositif selon la revendication 1, 3 ou 7,
pour lequel l'élément de protection d'antenne (14) est composé d'une unique pièce constituée d'un matériau diélectrique, notamment du polytétrafluoréthylène (PTFE).

**8.** Dispositif selon la revendication 1, 3 ou 7,
pour lequel l'élément de protection d'antenne (14) est composé de plusieurs pièces constituées de matériaux diélectriques.

**9.** Dispositif selon la revendication 7,
pour lequel l'élément de protection d'antenne (14) est constitué d'un matériau thermiquement isolant, résistant à la pression.

Fig. 1

Fig. 2

Fig. 3

Fig. 4

Fig. 5

Fig. 6

13

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10118008 A1
- EP 1083413 B1
- US 6684697 B1
- US 6629458 B1
- US 2006109010 A1